# EUROPEAN PATENT APPLICATION

(11) **EP 4 672 402 A1**
(43) Date of publication of application: **31.12.2025**
(21) Application number: 24901094.3
(22) Date of filing: 05.12.2024
(51) Int. Cl.: H01M 10/052, H01M 10/0562, H01M 10/44, H01M 50/457, H01M 50/451, H01M 4/134, H01M 4/525, H01M 4/505, H01M 50/417, H01M 50/431

(54) **LITHIUM METAL BATTERY HAVING LOW-RESISTANCE PERFORMANCE AND MANUFACTURING METHOD THEREFOR**

(30) Priority: 05.12.2023 KR 20230174492; 04.12.2024 KR 20240178245
(71) Applicant: LG Energy Solution, Ltd., Seoul 07335 (KR)
(72) Inventor: LIM, Taeseob, Daejeon 34122 (KR); BYUN, Seoungwoo, Daejeon 34122 (KR); RYU, Jihoon, Daejeon 34122 (KR); KIM, Dong Kyu, Daejeon 34122 (KR); JUN, Youngjin, Daejeon 34122 (KR); JANG, Eunji, Daejeon 34122 (KR)
(74) Representative: Goddar, Heinz J.
(86) International application number: PCT/KR2024/019841
(87) International publication number: WO 2025/121908

(57) **Abstract**

According to an embodiment of the present disclosure, there is provided a lithium metal battery comprising:
a positive electrode which includes a positive electrode current collector, and a positive electrode active material layer formed on one side or both sides of the positive electrode current collector,
a negative electrode which includes a lithium metal layer, and
a separator which includes a substrate, and an oxide-based solid electrolyte layer formed on one side or both sides of the substrate and including lithium aluminum titanium phosphate(LATP),
wherein the oxide-based solid electrolyte layer of the separator faces the lithium metal layer of the negative electrode, and
wherein an inorganic layer containing a reduced product of the LATP is formed at an interface between the oxide-based solid electrolyte layer and the lithium metal layer, and a method for manufacturing the same.

## Description

### [TECHNICAL FIELD]

### Cross-Reference to Related Application(s)

This application claims priority to and the benefit of Korean Patent Application No. 10-2023-0174492, filed on December 5, 2023, and Korean Patent Application No. 10-2024-0178245, filed on December 4, 2024, with the Korean Intellectual Property Office, the disclosures of which are incorporated herein by reference in their entirety.

The present disclosure relates to a lithium metal battery having low resistance performance and a method for manufacturing the same.

### [BACKGROUND]

Due to the rapid increase in the use of fossil fuels, the demand for the use of alternative energy or clean energy is increasing, and as a part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibit high energy density and operating potential, have a long cycle life, and a low self-discharge rate, and has been commercialized and widely used.

In addition, as interest in environmental issues grows, studies are frequently conducted on an electric vehicle, a hybrid electric vehicle, etc. which can replace a vehicle using fossil fuels such as a gasoline vehicle and a diesel vehicle, which are one of the main causes of air pollution. Although a nickel metal hydride secondary battery is mainly used as a power source for the electric vehicle and the hybrid electric vehicle, numerous studies have been actively made to use a lithium secondary battery having a high energy density and a high discharge voltage, a part of which are in the commercializing stage.

A lithium secondary battery generally has a structure in which a non-aqueous electrolytic solution is impregnated into an electrode assembly including a positive electrode, a negative electrode and a porous separator. In general, the positive electrode is prepared by coating a positive electrode mixture including a positive electrode active material onto an aluminum foil, and the negative electrode is prepared by coating a negative electrode mixture including a negative electrode active material onto a copper foil.

Usually, the positive electrode active material is a lithium transition metal oxide, and the negative electrode active material is a carbon-based material.

Recently, however, as a negative electrode active material, a lithium metal battery using a lithium metal itself exhibiting a high energy density has been commercialized.

At this time, since the lithium metal used as the negative electrode has a low density (0.54 g/cm³) and a very low standard reduction potential (-3.045 V SHE; standard hydrogen electrode), it is a material that attracts considerable attention as a negative electrode material for a high-energy density battery. Further, despite problems caused by very high chemical activity, recently, with steady increase in the use of mobile communications and portable electronic devices and rapid development thereof, a demand for development of a secondary battery having high energy density is continuously increasing. Therefore, the necessity for using lithium metal negative electrodes continues to emerge.

However, lithium metal has safety issues such as its activity being too high, and the formation of lithium dendrites during charging and discharging. Furthermore, in order to improve the output characteristics, which are one of the most important performances of lithium secondary batteries, the formation of SEI, which occupies the biggest portion of the cell resistance, has been an issue.

Therefore, there is an urgent need to develop a lithium metal battery that can solve these problems and thus enhance output characteristics and improve safety issues.

### [DETAILED DESCRIPTION OF THE INVENTION]

### [Technical Problem]

Therefore, it is an object of the present disclosure to provide a lithium metal battery that improves output characteristics while ensuring safety.

### [Technical Solution]

According to an embodiment of the present disclosure, there is provided a lithium metal battery comprising:
a positive electrode which includes a positive electrode current collector, and a positive electrode active material layer formed on one side or both sides of the positive electrode current collector,
a negative electrode which includes a lithium metal layer, and
a separator which includes a substrate, and an oxide-based solid electrolyte layer formed on one side or both sides of the substrate and including lithium aluminum titanium phosphate(LATP),
wherein the oxide-based solid electrolyte layer of the separator faces the lithium metal layer of the negative electrode, and
wherein an inorganic layer containing a reduced product of the LATP is formed at an interface between the oxide-based solid electrolyte layer and the lithium metal layer.

Here, the inorganic layer fills a part or all of the pores of the oxide-based solid electrolyte layer, or forms a separate layer at an interface between the oxide-based solid electrolyte layer and the lithium metal layer, or include all of these forms.

In this case, specifically, the inorganic layer may be configured to fill the pores of the oxide-based solid electrolyte layer at 10 volume% to 100 volume% based on the total volume of the pores, and form a separate layer having a thickness of 1 nm to 10 nm.

The LATP reduced product, which is one component of the inorganic layer, may include a lithiated-LATP formed by a spontaneous lithiation reaction of the LATP as shown in the following Reaction Formula 1.

[Reaction Formula 1] Li_{1.3}Al_{0.3}Ti_{1.7}(PO₄)₃ -> Li₃Al_{0.3}Ti_{1.7}(PO₄)₃

Furthermore, the lithium metal battery further comprises a lithium non-aqueous electrolyte, and
the inorganic layer may further comprise the LATP reduced product and the SEI material, wherein the SEI material may be at least one material selected from the group consisting of LiF, Li₂CO₃, and Li₂O.

More specifically, the inorganic layer may be composed of a LATP reduced product and an SEI material.

Meanwhile, the oxide-based solid electrolyte layer may be formed on both sides of the substrate.

The substrate may be a polyolefin substrate, and the oxide-based solid electrolyte layer may be composed of an oxide-based solid electrolyte containing lithium aluminum titanium phosphate(LATP) and a binder.

Here, the oxide-based solid electrolyte layer may be formed to a thickness of 0.1 *µ*m to 20 *µ*m on one side of the substrate.

Furthermore, the positive electrode active material layer may comprise a lithium transition metal oxide represented by the following Chemical Formula 1 as a positive electrode active material:

[Chemical Formula 1] Li₁₊ₓNiₐCo_{b}Mn_{c}M_{1-(a+b+c)}O₂

wherein,
M is at least one selected from the group consisting of Al, Fe, V, Cr, Ti, Ta, Mg, and Mo, and
0≤x≤0.5, 0<a<1, 0<b<1, 0<c<1.

On the other hand, according to another embodiment of the present disclosure, there is provided a method for manufacturing the lithium metal battery, the method comprising the steps of:
manufacturing a lithium metal battery including an electrode assembly in which a separator having an oxide-based solid electrolyte layer containing lithium aluminum titanium phosphate(LATP) formed on one or both sides is interposed between a negative electrode and a positive electrode so that the oxide-based solid electrolyte is in contact with the lithium metal layer, and activating the lithium metal battery, wherein an inorganic layer containing a reduced product of LATP is formed at an interface between the oxide-based solid electrolyte layer and the lithium metal layer.

In this case, the lithium metal battery may be manufactured by incorporating the electrode assembly and the lithium non-aqueous electrolyte into a battery case.

The inorganic layer further comprises the LATP reduced product and the SEI material, wherein the SEI material may be at least one material selected from the group consisting of LiF, Li₂CO₃, and Li₂O.

Here, the activating step comprises a step of aging at room temperature for 12 to 36 hours.

### [BRIEF DESCRIPTION OF THE DRAWING]

FIG. 1 is a schematic diagram showing a state in which an inorganic layer is formed at an interface between the negative electrode and the separator according to an embodiment of the present disclosure.
FIG. 2 is a photograph of the surface of the separator obtained by disassembling Li/Li symmetric cells manufactured according to Experimental Example 1.
FIG. 3 is an XRD pattern of the separator before and after activation of the Li/Li symmetric cell manufactured according to Experimental Example 2.
FIG. 4 is an XPS spectra analysis graph of the Li metal surface after activation and cycling of the Li/Li symmetric cell manufactured according to Experimental Example 3.
FIG. 5 is a graph showing the Li plating/stripping evaluation of Li/Li symmetric cells manufactured according to Experimental Example 4.
FIG. 6 is a graph showing a PEIS (potentiostatic Electrochemical Impedance Spectroscopy) evaluation of the coin-half cells manufactured according to Experimental Example 5.
FIGS. 7 and 8 are graphs showing the voltage per hour of the OCV of the coin-half cells according to Experimental Example 6.

### [DETAILED DESCRIPTION OF THE EMBODIMENTS]

Hereinafter, terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" as used herein does not exclude the existence or the addition of one or more elements other than those mentioned.

Meanwhile, the terms "consists of" and/or "consisting of" as used herein mean that in addition to the recited components, other components are not contained more than impurity levels, i.e., trace amounts.

A lithium metal battery according to an embodiment of the present disclosure comprise:
a positive electrode which includes a positive electrode current collector, and a positive electrode active material layer formed on one side or both sides of the positive electrode current collector,
a negative electrode which includes a lithium metal layer, and
a separator which includes a substrate, and an oxide-based solid electrolyte layer formed on one side or both sides of the substrate and including lithium aluminum titanium phosphate(LATP),
wherein the oxide-based solid electrolyte layer of the separator faces the lithium metal layer of the negative electrode, and
wherein an inorganic layer containing a reduced product of the LATP is formed at an interface between the oxide-based solid electrolyte layer and the lithium metal layer.

### Positive electrode

A positive electrode has a structure which includes a positive electrode current collector, and a positive electrode active material layer formed on one side or both sides of the positive electrode current collector.

Here, the positive electrode current collector is not particularly limited so long as it has conductivity without causing any chemical change in the battery. For example, as the current collector, stainless steel, aluminum, nickel, titanium, fired carbon, or aluminum or stainless steel of which surface is treated with one of carbon, nickel, titanium, silver, or the like may be used.

The positive electrode current collector may have a thickness of 3*µ*m to 500*µ*m, and may have fine protrusions and depressions formed on a surface thereof to enhance adherence of a positive electrode active material layer. For example, the positive electrode current collector may be used in various forms such as a film, a sheet, a foil, a net, a porous body, a foaming body, and a non-woven fabric structure.

The positive electrode active material layer may include a positive electrode active material, and optionally, a conductive material, a binder, and other additives.

The positive electrode active material is not limited as long as it is a compound capable of reversibly intercalating and deintercalating lithium, wherein the positive electrode active material may specifically include a lithium metal oxide including lithium and at least one metal such as cobalt, manganese, nickel, or aluminum. More specifically, the positive electrode active material may include a lithium transition metal oxide represented by the following Chemical Formula 1.:

[Chemical Formula 1] Li₁₊ₓNiₐCo_{b}Mn_{c}M_{1-(a+b+c)}O₂

wherein,
M is at least one selected from the group consisting of Al, Fe, V, Cr, Ti, Ta, Mg, and Mo, and
0≤x≤0.5, 0<a<1, 0<b<1, 0<c<1.

In addition, the positive electrode active material may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., Li_{1+x'}Ni_{1-y}Mn_{y}O₂(where -0.5≤x'≤0.5, 0<Y<1), Li_{1+x"} Mn_{2-Z}Ni_{Z}O₄(where -0.5≤x"≤0.5, 0 < Z < 2), etc.), lithium-nickel-cobalt-based oxide (e.g., Li_{1+x‴}Ni_{1-Y1}Co_{Y1}O₂(where -0.5≤x‴≤0.5, 0<Y1<1), etc.), lithium-manganese-cobalt-based oxide (e.g., Li_{1+xʺʺ}Co_{1-Y2}Mn_{Y2}O₂(where, -0.5≤xʺʺ≤0.5, 0<Y2<1), Li_{1+xʺ‴}Mn_{2-Z1}Co_{Z1}O₄(where -0.5≤xʺ‴≤0.5, 0 < Z1 < 2), etc.), lithium-nickel-manganese-cobalt-based oxide (e.g., Li₁₊ₐ₁(NiₚCo_{q}Mnᵣ)O₂(where -0.5≤a1≤0.5, 0 < p < 1, 0 < q < 1, 0 < r < 1, p+q+r=1) or Li₁₊ₐ₂(Niₚ₁Co_{q1}Mnᵣ₁)O₄ (where -0.5≤a2≤0.5, 0 < p1 < 2, 0< q1 < 2, 0 < r1 < 2, p1+q1+r1=2), etc.), or lithium-nickel-cobalt-transition metal(M) oxide (e.g., Li₁₊ₐ₃(Niₚ₂Co_{q2}Mnᵣ₂Mₛ₂)O₂ (where M is selected from the group consisting of Al, Fe, V, Cr, Ti, Ta, Mg and Mo, and a3, p2, q2, r2 and s2 are atomic fractions of each independent elements, wherein -0.5≤a3≤0.5, 0 < p2 < 1, 0 < q2 < 1, 0 < r2 < 1, 0 < s2 < 1, p2+q2+r2+s2=1), etc.), lithium iron phosphate (e.g., Li₁₊ₐ₄Fe₁₋ₚ₃Mₚ₃(PO_{4-b4})X_{b4} (where M is at least one selected from Al, Mg, and Ti, X is at least one selected from F, S, and N, and -0.5≤a4≤0.5, 0≤p3≤0.5, 0≤b4≤0.1), and any one thereof or a compound of two or more thereof may be included.

Among these materials, in terms of the improvement of the capacity characteristics and stability of the battery, the lithium metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂ and Li(Ni_{0.8}Mn_{0.1}Co_{0.1})O₂, etc.), lithium nickel cobalt aluminum oxide (e.g., Li(Ni_{0.8}Co_{0.15}Al_{0.05})O₂, etc.), or lithium nickel manganese cobalt aluminum oxide (e.g., Li(Ni_{0.86}Co_{0.05}Mn_{0.07}Al_{0.02})O₂), lithium iron phosphate (e.g., LiFePO₄), etc., and a mixture of two or more thereof may be used, and it may may include Li(Ni_{0.86}Co_{0.05}Mn_{0.07}Al_{0.02})O₂, which is a lithium transition metal oxide represented by Chemical Formula 1.

The positive electrode active material may be included in an amount of 60 to 98 wt.%, preferably 80 to 98 wt.%, and more preferably 90 to 98 wt.%, based on the total weight of the positive electrode active material layer.

The conductive material is a component for further improving the conductivity of the positive electrode active material. Such a conductive material is not particularly limited as long as it has conductivity without causing any chemical change in the battery, and, for example, carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used.

The conductive material may be contained in an amount of 0.1 to 20 wt.%, specifically 0.5 to 10 wt.%, and more specifically 0.5 to 5 wt.%, based on the total weight of the positive electrode active material layer.

The binder is a component that assists in the bonding between the conductive material, the positive electrode active material and the positive electrode current collector. Examples of the binder may include polyvinylidene fluoride (PVDF), polyvinyl alcohol, carboxymethylcellulose(CMC), starch, hydroxypropyl cellulose, regenerated cellulose, polyvinylpyrrolidone, polyethylene, polypropylene, ethylene-propylene-diene monomer, sulfonated ethylene-propylene-diene monomer, styrenebutadiene rubber, fluororubber, various copolymers thereof, or the like.

Typically, the binder may be included in an amount of 0.5 to 20 wt.%, specifically 0.5 to 10 wt.%, and more specifically 0.5 to 5 wt.% based on the total weight of the positive electrode active material layer.

In addition, the other additives may further include, for example, a filler and the like as a component for inhibiting the expansion. The filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

### Negative electrode

A negative electrode has a structure including a lithium metal layer. More specifically, it may be formed of a lithium metal layer, or may have a structure in which a lithium metal layer is formed on one side or both sides of a separate negative electrode current collector.

The negative electrode formed of the lithium metal layer may be formed of lithium metal itself without a separate negative electrode current collector. Therefore, in this case, the lithium metal layer may have a sufficient thickness, for example, a thickness of 10 *µ*m to 300 *µ*m.

Meanwhile, a structure including a separate current collector in addition to the lithium metal layer used as the negative electrode active material layer is more preferable in terms of its stability and structure.

The negative electrode current collector is not particularly limited as long as it has high conductivity without causing any chemical change in the battery. Examples of the negative electrode current collector may include copper, stainless steel, aluminum, nickel, titanium, fired carbon, a copper or stainless steel of which surface is treated with carbon, nickel, titanium, silver, or the like, an aluminum-cadmium alloy, or the like.

The negative electrode current collector may typically have a thickness of 3 to 500*µ*m. Similarly to the positive electrode current collector, the negative electrode current collector may have fine protrusions and depressions formed on the surface thereof to enhance the bonding force of the negative electrode active material. For example, the negative electrode current collector may be used in various forms such as a film, a sheet, a foil, a net, a porous body, a foaming body, and a nonwoven fabric structure.

The lithium metal layer may be formed by physically bonding, rolling, or depositing a lithium metal on the negative electrode current collector. The deposition method may use an electrical deposition method or a chemical vapor deposition method.

Here, the lithium metal layer may include an alloy that partially contains one metal selected from the group consisting of nickel(Ni), tin(Sn), copper(Cu), and indium(In) in addition to lithium(Li).

Here, the lithium metal layer may be formed to a total thickness of 10 to 300 *µ*m so as to sufficiently function as an negative electrode active material.

### Separator

The separator has a structure which includes a substrate, and an oxide-based solid electrolyte layer formed on one side or both sides of the substrate and including lithium aluminum titanium phosphate(LATP).

Here, the substrate can be used without particular limitation as long as it is commonly used as a separator in a lithium metal battery, and those having an excellent electrolyte liquid moisture-containing ability while having low resistance against ion migration of the electrolyte liquid are particularly preferred.

For example, the substrate is a polyolefin substrate such as an ethylene homopolymer, a propylene homopolymer, an ethylene/butene copolymer, an ethylene/hexene copolymer, and an ethylene/methacrylate copolymer, and a porous polymer film or a laminated structure of two or more layers thereof may be used. Further, a typical porous nonwoven fabric, for example, a nonwoven fabric made of a glass fiber having a high melting point, a polyethylene terephthalate fiber or the like can be used as the separator, but specifically, it may be a polyolefin substrate.

An oxide-based solid electrolyte layer is formed on one side or both sides of the substrate.

In this case, the oxide-based solid electrolyte layer may include an oxide-based solid electrolyte containing lithium aluminum titanium phosphate(LATP) and a binder.

In addition to the lithium aluminum titanium phosphate, the oxide-based solid electrolyte layer may further, as the other oxide-based solid electrolyte, at least one lithium metal oxide or lithium metal phosphate selected from NASICON-type solid electrolyte, LISICON-type solid electrolyte, Garnet-type solid electrolyte, Perovskite-type solid electrolyte, and LiPON-type solid electrolyte. More specific examples thereof may further include at least one selected from the group consisting of LAGP(lithium aluminum germanium phosphate)-based compound, LLZO(lithium lanthanum zirconium oxide)-based compound, LATP(lithium aluminum titanium phosphate)-based compound, LLZTO(lithium lanthanum zirconium tantalum oxide)-based compound, LLTO(lithium lanthanum titanium oxide)-based compound, LSTP(lithium silicon titanium phosphate)-based compound, and LGPO(lithium germanium phosphate)-based compound.

The oxide-based solid electrolyte may be included in an amount of 70 wt.% to 99 wt.%, and specifically 80 wt.% to 99 wt.%, based on the total weight of the oxide-based solid electrolyte layer.

If the content is too low and outside the above range, it is not be possible to obtain the sufficient reduced product intended by the present application, and if the content is too high, the content of the binder connecting them is too low, so that the adhesive strength between the particles is weakened and thus the mechanical properties may be deteriorated, which is not preferable.

The average diameter(D50) of the oxide-based solid electrolyte particles may be 50 nanometers to 10 micrometers, specifically 50 nanometers to 5 micrometers, and more specifically 50 nanometers to 1 micrometer.

If the average diameter is too small and outside the above range, aggregation between particles may occur due to a decrease in the dispersibility. Conversely, if the average diameter is too large, the pores are formed too large by the oxide-based solid electrolyte, which is rather not preferable in terms of resistance. That is, when the average diameter satisfies the above range, the lithium ion conductivity can be increased to thereby reduce resistance and exhibiting improved secondary battery performance.

As used herein, the average diameter D50 means a particle diameter at which cumulative volumes of particles reach 50% in the particle size distribution curve of the particles. The D50 can be measured, for example, by using a laser diffraction method. The laser diffraction method can generally measure particle diameters ranging from a submicron range to several millimeters, and can obtain results with high reproducibility and high resolvability.

Meanwhile, the binder, which is another component of the oxide-based solid electrolyte layer, is not limited as long as it does not cause a side reaction with the electrolyte solution, but particularly, a binder having a glass transition temperature(Tg) as low as possible can be used, and the temperature is preferably in the range of -200 to 200°C.

Further, the binder does not necessarily need to have ion conduction ability, but it is more preferable to use a polymer having ion conduction ability.

Therefore, the binder preferably has a high dielectric constant if possible. Actually, since the degree of dissociation of a salt in an electrolyte depends on the dielectric constant of the electrolyte solvent, the higher the dielectric constant of the polymer, the more the degree of salt dissociation in the electrolyte can be improved. The dielectric constant of the polymer can be 1 or more, specifically in the range of 1.0 to 100 (measurement frequency = 1 kHz), and is particularly preferably 10 or more.

In addition to the foregoing functions, the binding material may have characteristic which can exhibit a high electrode impregnation (degree of swelling) by gelation when being impregnated into the liquid electrolyte. When the binding material has practically excellent electrode impregnation, the electrolyte injected after the battery is assembled may permeates into the polymer, and the polymer containing the absorbed electrolyte has an electrolyte ion conducting ability. Therefore, if possible, a polymer with a solubility parameter of 15 to 45 MPa^{1/2} is preferred, and the ranges of 15 to 25 MPa^{1/2} and 30 to 45 MPa^{1/2} are more preferred. When the solubility parameter is less than 15 MPa^{1/2} and more than 45 MPa^{1/2}, it becomes difficult to be swelled by a typical liquid electrolyte for batteries.

Examples of the binder include at least one selected from the group consisting of polyvinylidene fluorideco-hexafluoropropylene, polyvinylidene fluoride-cotrichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose and polyvinylalcohol.

In detail, the oxide-based solid electrolyte layer of the present application is intended to allow the LATP contained in such an oxide-based solid electrolyte layer to face and directly contact the lithium metal layer of the negative electrode and thereby form a reduced product of LATP, and therefore, is preferably formed of an oxide-based solid electrolyte containing the LATP and a binder, and it is preferable to contain no other materials since they may interfere with the reduction of LATP.

Therefore, the binder may be included in an amount of 1 wt.% to 30 wt.%, specifically 1 wt.% to 20 wt.%, based on the total weight of the oxide-based solid electrolyte layer.

Such an oxide-based solid electrolyte layer may be formed on one side or both sides of the substrate, but is preferably formed on both sides since it exhibits a more excellent overvoltage reduction when formed on both sides. Of course, when the oxide-based solid electrolyte layer is formed on only one side, the electrode assembly must be manufactured so that the oxide-based solid electrolyte layer faces the lithium metal layer of the negative electrode in order to form a reduced product of LATP intended by the present application.

In this case, the oxide-based solid electrolyte layer may be formed to a thickness of 0.1 *µ*m to 20 *µ*m on one side of the substrate.

If the thickness is too thin and outside the above range, the effect due to the generatio0n of the reduced product of LATP intended by the present application cannot be sufficiently obtained, and if the thickness is too thick, the resistance may increase, which is not preferable.

Meanwhile, the total thickness of the separator including the substrate and the oxide-based solid electrolyte layer may be 5 micrometers to 50 micrometers, specifically 5 micrometers to 40 micrometers, and more specifically 10 micrometers to 30 micrometers. If the thickness of the separator satisfies the above range, it is possible to effectively prevent short circuits between the positive electrode and the negative electrode while minimizing the resistance value of the lithium metal battery. As a result, it is possible to prevent a decrease in energy density of lithium secondary batteries and improve life characteristics.

Meanwhile, if the oxide-based solid electrolyte layer is formed on one side or both sides, the oxide-based solid electrolyte layer is made to face the lithium metal layer of the negative electrode, whereby the reduced product of LATP is formed at an interface between the oxide-based solid electrolyte layer and the lithium metal layer.

Here, the reduced product of LATP may include a lithiated-LATP formed by a spontaneous lithiation reaction of the LATP through contact between the LATP and the lithium metal layer, as shown in the following Reaction Formula 1.

[Reaction Formula 1] Li_{1.3}Al_{0.3}Ti_{1.7}(PO₄)₃ -> Li₃Al_{0.3}Ti_{1.7}(PO₄)₃

In addition, the lithium metal battery may further include a lithium non-aqueous electrolyte, and thus, an SEI material may be further included on the surface of the lithium metal layer of the negative electrode. Therefore, in the lithium metal battery of the present disclosure, the inorganic layer formed at an interface between the oxide-based solid electrolyte layer and the lithium metal layer may include both the LATP reduced product and the SEI material, and specifically, may be composed of the LATP reduced product and the SEI material.

In this case, the SEI material may be at least one material selected from the group consisting of LiF, Li₂CO₃, and Li₂O, and the inorganic layer may include at least one material selected from the group consisting of a lithiated-LATP, LiF, Li₂CO₃, and Li₂O.

Since this inorganic layer is formed by contact between the LATP and the lithium metal, and a reaction between the lithium metal and the lithium non-aqueous electrolyte due to activation of the lithium metal battery, it may be mainly formed on the surface of the lithium metal layer.

More specifically, the LATP reduced product can be formed by a reaction between the oxide-based solid electrolyte layer and the metal of the lithium metal layer of the negative electrode, and the SEI material is formed by a reaction between lithium ions generated by the activation process and the lithium non-aqueous electrolyte.

The lithium non-aqueous electrolyte may include a lithium salt, and a non-aqueous organic solvent.

In this case, the lithium salt is used as a medium for transferring ions within a lithium secondary battery. For example, the lithium salt may include Li⁺ as a cation, and may include at least one selected from the group consisting of F⁻, Cl⁻, Br⁻, I⁻, NO3⁻, N(CN)2⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may include a single substance or a mixture of two or more selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI(lithium bis(perfluoroethanesulfonyl) imide, LiN(SO₂CF₂CF₃)₂ and LiTFSI (lithium bis(trifluoromethanesulfonyl) imide, LiN(SO₂CF₃)₂). However, in terms of excellent stability, it is preferable to include Li(N(SO₂CF₃)₂.

In addition to these, the lithium salt commonly used in an electrolyte of a lithium secondary battery can be used without particular limitation.

The concentration of the lithium salt can be appropriately changed within a generally usable range, but the lithium salt may be included in the electrolyte at a concentration of 0.5 M to 3 M, specifically at a concentration of 1 M to 2.5 M, and more specifically, at a concentration of 1 M to 2 M, in the electrolyte in order to obtain an optimal effect of forming a film for preventing corrosion on the electrode surface. When the concentration of the lithium salt satisfies the above range, the effect of improving cycle characteristics during high-temperature storage of the lithium secondary battery is sufficient, and the viscosity of the electrolyte is appropriate, so that electrolyte impregnation can be improved.

The non-aqueous organic solvent is not limited as long as it may minimize decomposition due to an oxidation reaction or the like during charge and discharge of the lithium secondary battery, and may exhibit desired characteristics with an additive. For example, a carbonate-based organic solvent, an ether-based organic solvent, an ester-based organic solvent, and the like may be used alone or in mixture of two or more thereof, and specifically, a carbonate-based organic solvent may be used.

The carbonate-based organic solvent among the organic solvents may include at least one selected from the group consisting of a cyclic carbonate-based organic solvent and a linear carbonate-based organic solvent. Specifically, the cyclic carbonate-based organic solvent may include at least one selected from the group consisting of ethylene carbonate(EC), propylene carbonate(PC), 1,2-butylene carbonate, 2,3-butylene carbonate, 1,2-pentylene carbonate, 2,3-pentylene carbonate, vinylene carbonate, and fluoroethylene carbonate(FEC). Specifically, it may include a mixed solvent of ethylene carbonate having a high dielectric constant and propylene carbonate having a relatively low melting point compared to the ethylene carbonate.

Further, the linear carbonate-based organic solvent is a solvent having low viscosity and low dielectric constant, and may include at least one selected from the group consisting of dimethyl carbonate(DMC), diethyl carbonate(DEC), dipropyl carbonate, ethyl methyl carbonate(EMC), methylpropyl carbonate, and ethylpropyl carbonate, and, more specifically, it may include dimethyl carbonate.

The ether-based organic solvent may include any one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound well dissociates the lithium salt in the electrolyte due to high dielectric constant as a highly viscous organic solvent, the cyclic carbonate-based compound may be preferably used. When the above cyclic carbonate-based compound is mixed with the low viscosity, low dielectric constant linear carbonate-based compound, such as dimethyl carbonate and diethyl carbonate, in an appropriate ratio, an electrolyte having high electrical conductivity may be prepared, which may be more preferably used.

Moreover, the lithium non-aqueous electrolyte further comprises a functional additive, and the functional additive may be included to prevent the induction of negative electrode collapse in a high power environment, or to further improve the low temperature high rate discharge characteristics, high temperature stability, overcharge prevention, swelling improvement effects during high temperature storage, and the like.

Specifically, as a representative example, the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound. In detail, it may include a halogen-substituted carbonate-based compound, and/or a lithium salt-based compound, which may include a halogen element, and more specifically, it may include a carbonate-based compound substituted with a fluoro group(F), and/or a lithium salt-based compound including a fluorine group(F).

The sultone-based compound may include at least one compound selected from the group consisting of 1,3-propane sultone(PS), 1,4-butane sultone, ethane sultone, 1,3-propene sultone(PRS), 1,4-butene sultone, and 1-methyl-1,3-propene sultone, and may be included in an amount of 0.3 wt.% to 5 wt.%, and specifically 1 wt.% to 5 wt.% based on the total weight of the electrolyte. In a case in which the amount of the sultone-based compound in the electrolyte is greater than 5 wt.%, an excessively thick layer may be formed on the surface of the electrode to cause an increase in resistance and a degradation of output, and resistance due to the excessive amount of the additive may be increased to degrade output characteristics.

The sulfite-based compound may include at least one compound selected from the group consisting of ethylene sulfite, methylethylene sulfite, ethylethylene sulfite, 4,5-dimethylethylene sulfite, 4,5-diethylethylene sulfite, propylene sulfite, 4,5-dimethylpropylene sulfite, 4,5-diethylpropylene sulfite, 4,6-dimethylpropylene sulfite, 4,6-diethylpropylene sulfite, and 1,3-butylene glycol sulfite, and may be included in an amount of 3 wt.% or less based on the total weight of the electrolyte.

The sulfone-based compound may include at least one compound selected from the group consisting of divinyl sulfone, dimethyl sulfone, diethyl sulfone, methylethyl sulfone, and methylvinyl sulfone, and may be included in an amount of 3 wt.% or less based on the total weight of the electrolyte.

The sulfate-based compound may include ethylene sulfate(Esa), trimethylene sulfate(TMS), or methyl trimethylene sulfate(MTMS), and may be included in an amount of 3 wt.% or less based on the total weight of the electrolyte.

Further, the halogen-substituted carbonate-based compound may include fluoroethylene carbonate(FEC), and may be included in an amount of 10 wt.% or less, and specifically 5 wt.% or less, based on the total weight of the electrolyte. In a case in which the amount of the halogen-substituted carbonate-based compound in the electrolyte is greater than 10 wt.%, cell swelling performance may be degraded.

Further, the nitrile-based compound may include at least one compound selected from the group consisting of succinonitrile, adiponitrile(Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3 wt.% or less based on the total weight of the electrolyte. If the content of the cyclic carbonate-based compound in the electrolyte is greater than 3 wt.%, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite, and may be included in an amount of 3 wt.% or less based on the total weight of the electrolyte.

The borate-based compound may include lithium oxalyldifluoroborate, and may be included in an amount of 3 wt.% or less based on the total weight of the electrolyte.

The lithium salt-based compound is a compound different from the lithium salt included in the lithium non-aqueous electrolyte. The lithium salt-based compound may include at least one compound selected from the group consisting of LiPO₂F₂, LiODFB, LiBOB (lithium bisoxalate borate(LiB(C₂O₄)₂), LiFSI(lithium bis(fluorosulfonyl) imide, LiN(SO₂F)₂), and LiBF₄, specifically, it may be LiFSI (lithium bis(fluorosulfonyl) imide, LiN(SO₂F)₂), and may be included in an amount of 3 wt.% or less, specifically 1 wt.% or less, based on the total weight of the electrolyte.

Two or more kinds of the functional additives may be mixed, and included in an amount of 20 wt.% or less, specifically 0.1 wt.% to 10 wt.%, based on the total weight of the lithium non-aqueous electrolyte. If the content of the functional additive is greater than 20 wt.%, there is a possibility that excessive side reactions in the lithium non-aqueous electrolyte may occur during charge and discharge of the battery. In particular, it is not sufficiently decomposed at high temperatures, and may exist as an unreacted material or in a precipitated state in a lithium non-aqueous electrolyte at room temperature. Thereby, side reactions may occur in which the lifetime or resistance characteristics of the lithium metal battery are reduced.

More specifically, for the formation of the SEI material of the present disclosure, particularly for the inclusion of LiF, the lithium non-aqueous electrolyte may include a halogen-substituted carbonate-based compound and/or a lithium salt-based compound as a functional additive, and an example thereof may include fluoroethylene carbonate(FEC) and/or LiFSI (lithium bis(fluorosulfonyl) imide, LiN(SO₂F)₂).

Meanwhile, since the oxide-based solid electrolyte layer includes pores therein, the inorganic layer may be formed in a form that fills a part or all of the pores of the oxide-based solid electrolyte layer, or may be formed as a separate layer at an interface between the oxide-based solid electrolyte layer and the lithium metal layer, or may be formed to include all of these forms, that is, while being included in the pores and forming a layer.

When the inorganic layer fills the pores of the oxide-based solid electrolyte layer, it can be filled by 10 volume% to 100 volume%, specifically 30 volume% to 100 volume%, and more specifically 50 volume% to 80 volume%, based on the total volume of the pores.

In addition, when the inorganic layer is formed as a separate layer at the interface between the oxide-based solid electrolyte layer and the lithium metal layer, this layer may have a thickness of 1 nm to 100 nm, specifically 2 nm to 80 nm, and more specifically 3 nm to 50 nm.

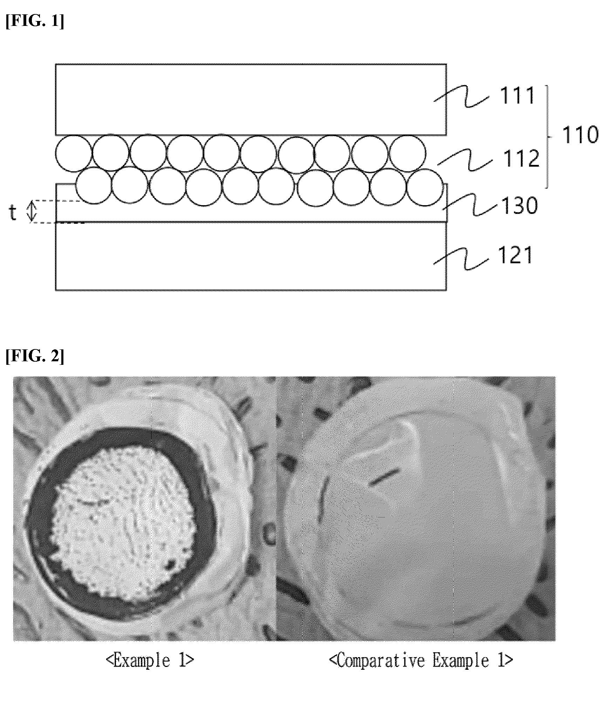

In order to more easily explain the formation of such an inorganic layer, FIG. 1 shows a schematic diagram of the interface where the separator and the negative electrode of the present disclosure come into contact with each other.

Referring to FIG. 1, the separator 110 has a structure which includes a substrate 111 and an oxide-based solid electrolyte layer 112 including LATP formed on one side of the substrate 111. When this oxide-based solid electrolyte layer 112 comes into contact with the lithium metal layer 121 of the negative electrode, it forms an inorganic layer 130 containing a lithiated-LATP in which LATP is reduced by a spontaneous reaction between LATP and Li. In this case, the inorganic layer 130 fills between the gaps of the oxide-based solid electrolyte layer 112, or is formed as a separate layer having a thickness t, and is formed on the surface of the lithium metal layer 121.

### Method for manufacturing lithium metal battery

Meanwhile, according to another embodiment of the present disclosure,
there is provided a method for manufacturing the lithium metal battery, the method comprising the steps of: manufacturing a lithium metal battery including an electrode assembly in which a separator having an oxide-based solid electrolyte layer containing lithium aluminum titanium phosphate(LATP) formed on one or both sides is interposed between a negative electrode and a positive electrode so that the oxide-based solid electrolyte is in contact with the lithium metal layer, and activating the lithium metal battery, wherein an inorganic layer containing a reduced product of LATP is formed at an interface between the oxide-based solid electrolyte layer and the lithium metal layer.

That is, the positive electrode, the negative electrode, and the separator are separately prepared, and they are stacked so that the oxide-based solid electrolyte of the separator comes into contact with the lithium metal layer of the negative electrode to prepare an electrode assembly.

Then, the electrode assembly and the lithium non-aqueous electrolyte are incorporated into in a battery case to manufacture a lithium metal battery.

In this lithium metal battery, the LATP of the oxide-based solid electrolyte layer and the lithium of the lithium metal layer react to spontaneously form a LATP reduced product, i.e., a lithiated-LATP.

However, the lithium metal battery undergoes an activation process after manufacture, and as a result, the reaction between the electrolyte and the lithium metal layer during activation forms an inorganic layer containing the LATP reduced product on the surface of the lithium metal layer, i.e., an inorganic layer containing an SEI material in addition to the LATP reduced product, specifically with the SEI material comprising one or more materials selected from the group consisting of LiF, Li₂CO₃, and Li₂O.

At this time, the inorganic layer is as described above.

Meanwhile, the activating step may include a step of aging at room temperature for 12 to 36 hours, wherein the reduction of LATP may occur spontaneously.

In addition, the activating step may include a process of charging the lithium metal battery one or more times, and an SEI material can be formed through this process.

When an inorganic layer is formed on the surface of the lithium metal layer through this activating step, a denser interface can be formed between the separator and the negative electrode, which can reduce the driving force required for Li ions to penetrate the SEI, thereby achieving the effect of improving output characteristics.

Meanwhile, the lithium non-aqueous electrolyte that is incorporated together with the electrode assembly in the manufacture of the lithium metal battery is as described above.

Hereinafter, the lithium secondary battery according to an embodiment of the present disclosure will be described with reference to Examples in order to demonstrate that it exhibits improved effects.

### <Example 1>

An oxide-based solid electrolyte layer (thickness: 20*µ*m) was formed on one side of a polyolefin substrate (thickness: 9 micrometers) to prepare a separator.

Here, the oxide-based solid electrolyte layer was prepared by mixing Li_{1.3}Al_{0.3}Ti_{1.7}(PO₄)₃: acrylic copolymer (CSB130, Toyoink) at a weight ratio of 95:5 and dispersing the mixture in acetone to prepare an electrolyte slurry, and coating the electrolyte slurry on one side of a solid polyolefin substrate and drying it.

### <Example 2>

A separator was prepared in the same manner as in Example 1, except that in Example 1, the oxide-based solid electrolyte layer was formed on both sides of the polyolefin substrate (thickness: 2 *µ*m each), respectively.

### <Comparative Example 1>

An organic/inorganic mixed layer (thickness: 20 *µ*m) was formed on one side of a polyolefin substrate (thickness: 15 micrometers) to prepare a separator.

Here, the organic/inorganic mixed layer was prepared by mixing Al₂O₃: PVdF at a weight ratio of 95:5 and dispersing the mixture in NMP to prepare an organic/inorganic slurry, coating the organic/inorganic slurry on one side of the polyolefin substrate, and drying it.

### <Comparative Example 2>

A polyolefin substrate (thickness: 35 micrometers) was prepared.

### <Experimental Example 1>

The separators prepared in Example 1 and Comparative Example 1 were interposed between lithium foil (thickness: 300 *µ*m) as a positive electrode and lithium foil (thickness: 300 *µ*m) as a negative electrode, and the oxide-based solid electrolyte layer or the organic/inorganic mixed layer was made to face the lithium foil of the negative electrode to prepare an electrode assembly, to which an electrolyte obtained by dissolving LiPF₆ to a concentration of 1.0M in a non-aqueous organic solvent having a composition of ethylene carbonate(EC): ethyl methyl carbonate(EMC) = 30:70 (volume ratio), and containing fluoroethylene carbonate (FEC) 0.5 wt.%, LiFSI (lithium bis(fluorosulfonyl) imide, LiN(SO₂F)₂), vinylene carbonate (VC) 0.5 wt.%, 1,3-propane sultone (PS) 0.5 wt.%, ethylene sulfate (Esa) 1.0 wt.%, and 1,3-propene sultone (PRS) 0.2 wt.% as additives was injected to manufacture Li/Li symmetric cells.

The Li/Li symmetric cells were left at 25°C for 24 hours, and then disassembled to observe the surface of the separator. The photograph thereof is shown in FIG. 2 below.

Referring to FIG. 2, it can be confirmed that in the case of including the separator according to Example 1, a reduced product is formed on the surface of the oxide-based solid electrolyte layer, whereas it can be seen that in the case of the separator of Comparative Example 2 using alumina, no material is formed on the surface.

### <Experimental Example 2>

The Li/Li symmetric cell manufactured using the separator of Example 1 in the same manner as in Experimental Example 1 was charged to 4.35 V at a constant current of 0.33 C at 25°C, aged at 25°C for 24 hours, aged at 60°C for 20 hours and then fully discharged at a constant current of 0.33C to perform activation.

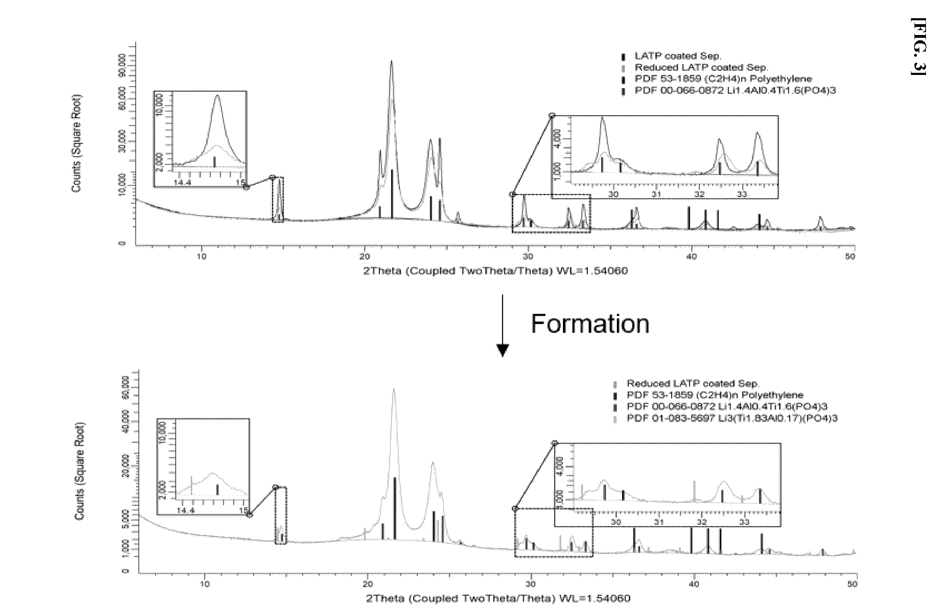

XRD analysis was performed on the separator coating layer before and after the activation process of the Li/Li symmetric cell, and the results are shown in FIG. 3.

It can be confirmed that no peak of lithiated-LATP composition was found before activation, but after activation, peak broadness appeared on the whole, and a peak of lithiated-LATP composition estimated to be a LATP reducted product was found.

### <Experimental Example 3>

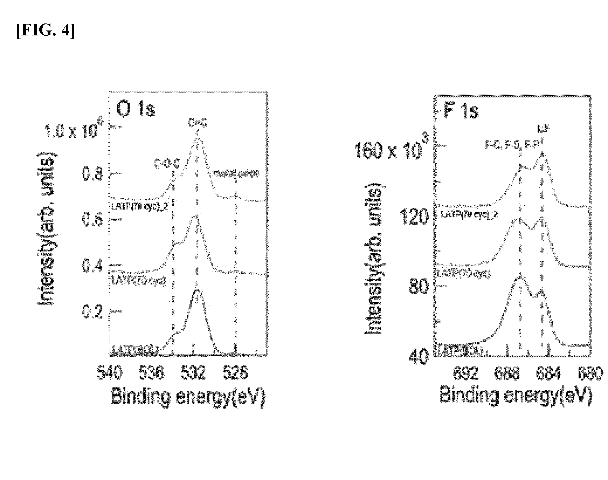

After activation was performed in Experimental Example 2, the Li metal surface facing the separator coating layer was analyzed, and again, the Li/Li symmetric cell was charged at 25°C with a constant current-constant voltage of 0.33C until 4.35V, followed by discharging with a constant current of 0.33C. The entire cycle was repeated 70 times, and then the Li metal surface analysis was performed twice. The results are shown in FIG. 4 below.

The Li metal surface analysis was performed using the XPS spectra method, and the equipment used was a Nexsa G2 ESCA system, Thermo Fisher Scientific, and the analysis was performed under the following conditions.
- X ray source: Monochromated Al Ka(1486.6eV),
- X ray spot size: 400*µ*m
- Sputtering gun: Monatomic Ar(energy: 1000eV, current: low, raster width: 2mm)
- Operation mode Constant Analyzer Energy mode
- Survey scan: pass energy 200eV, energy step 1eV,
- Narrow scan: scanned mode, pass energy 50eV, energy step 0.1eV

Referring to FIG. 4, it can be confirmed that the metal oxide peak is significantly observed and the LiF peak is clearly observed. This is because the reaction of LATP and the lithium metal layer reduces the Li+ coordination number and mitigates the electron bias toward Li+, so that the reduction of the fluorine group(F) included in the lithium non-aqueous electrolyte is relatively easy.

### <Experimental Example 4>

Li/Li symmetric cells were manufactured using the separators of Examples 1, 2, and Comparative Example 2 in the same manner as in Experimental Example 1.

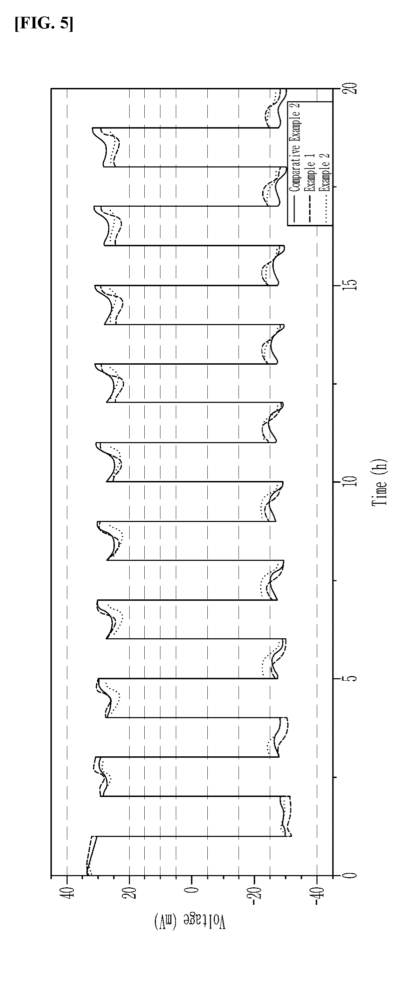

The Li/Li symmetric cells were subjected to a Li plating/stripping evaluation for 20 hours by applying an oxidation-reduction current of 1 mA/cm² alternately for 1 hour, and the results are shown in FIG. 5 below.

Referring to FIG. 5, it can be seen that the Li/Li symmetric cells using the separators of Examples 1 and 2 show a behavior in which the overvoltage decreases compared to the Li/Li symmetric cells using the separator of Comparative Example 2.

### <Experimental Example 5>

Li/Li symmetric cells were manufactured using the separators of Example 1 and Comparative Example 1 in the same manner as in Experimental Example 1.

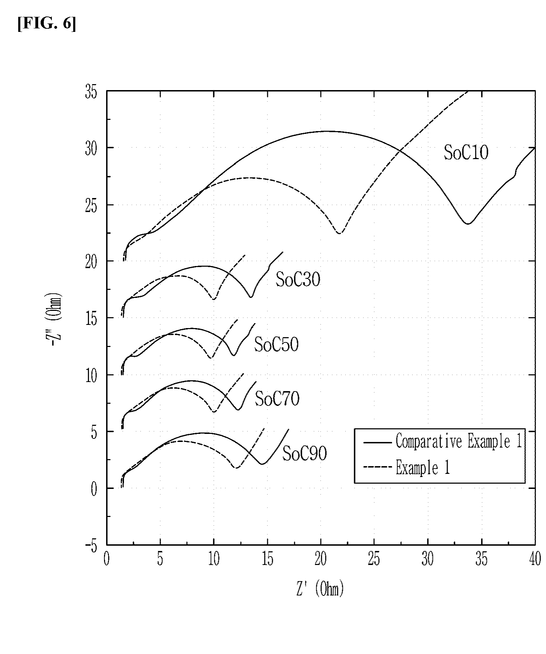

The PEIS evaluation was performed to illustrate the current signal appearing when AC voltages in the frequency range from 1 MHz to 50 mHz were applied to the Li/Li symmetrical cell at SOC(state of charge) 10, 30, 50, 70, and 90, respectively, and the results are shown in FIG. 6 below.

Referring to FIG. 6, it can be confirmed that over the entire SOC range, compared with the case where the separator of Comparative Example 1 coated with alumina was employed, the separator of Example 1 coated with an oxide-based solid electrolyte layer has a smaller semi circle size and exhibits a lower resistance.

### <Example 3>

A 15 micrometer thick aluminum(Al) metal film was prepared as a positive electrode current collector. Li(Ni_{0.86}Co_{0.05}Mn_{0.07}Al_{0.02})O₂ as a positive electrode active material, carbon nanotubes as a conductive material, and PVDF as a binder were added in a weight ratio of 96:1:3 in an NMP solvent, and dispersed to prepare a positive electrode slurry. The positive electrode slurry was coated to a thickness of 60 micrometers on one side of the aluminum metal film, followed by drying and rolling to prepare a positive electrode.

The separator of Example 1 was interposed between the positive electrode and lithium foil (thickness: 300 *µ*m) as the negative electrode, but interposed so that the oxide-based solid electrolyte layer faced the negative electrode to prepare an electrode assembly. The electrode assembly was incorporated into a case together with an electrolyte obtained by dissolving LiPF₆ at 1.0 M in a non-aqueous organic solvent having a composition of ethylene carbonate (EC) : ethyl methyl carbonate (EMC) = 30 : 70 (volume ratio), thereby manufacturing a coin half-cell.

### <Comparative Example 3>

A coin half-cell was manufactured in the same manner as in Example 3, except that in Example 3, an electrode assembly was prepared by interposing the separator so that the oxide-based solid electrolyte layer faced the positive electrode.

### <Experimental Example 6>

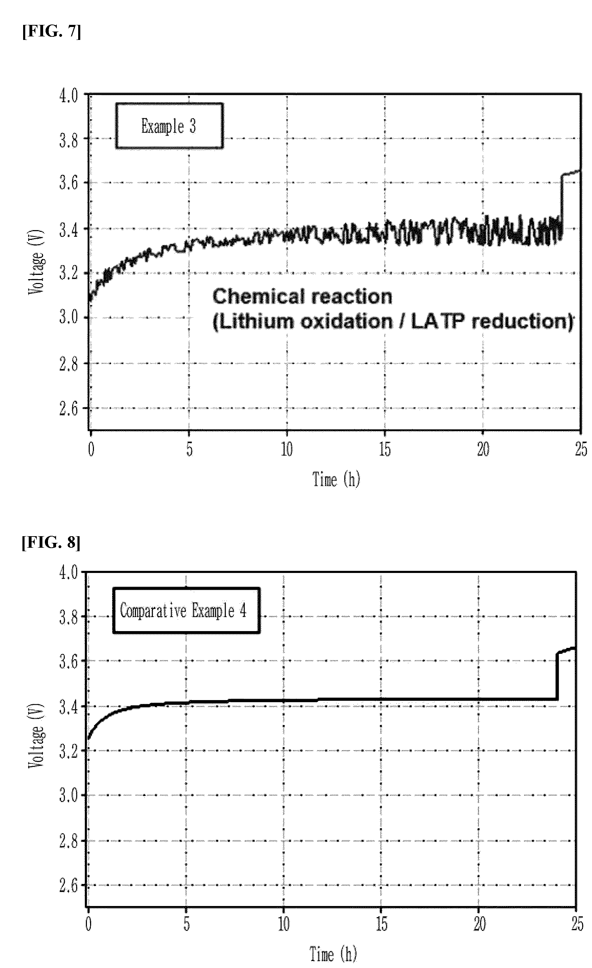

Each of the coin half-cells manufactured in Example 3 and Comparative Example 3 was left at 25°C for 24 hours, and OCV (open circuit voltage) was measured and shown in FIGS. 7 and 8 below.

Referring to FIGS. 7 and 8, it can be confirmed that the OCV fluctuation behavior due to the spontaneous reduction reaction of LATP is observed only in FIG. 7 of Example 3.

Based on the above disclosure, various applications and modifications can be carried out by those of ordinary skill in the art without deviating from the spirit and scope of the present disclosure.

### [Industrial Applicability]

The lithium metal battery according to the present disclosure forms an oxide-based solid electrolyte layer containing LATP on a separator substrate, thereby ensuring safety, while the oxide-based solid electrolyte layer containing LATP is brought into direct contact with a lithium metal layer to form a LATP reduced product at an interface between them, so that the driving force required for Li ions to penetrate the SEI can be reduced by the formation of a dense interface between the negative electrode containing the lithium metal layer and the separator, which is effective in lowering the resistance due to SEI formation and thus improving the output characteristics of the lithium metal battery.

## Claims

1. A lithium metal battery comprising:
a positive electrode which includes a positive electrode current collector, and a positive electrode active material layer formed on one side or both sides of the positive electrode current collector,
a negative electrode which includes a lithium metal layer, and
a separator which includes a substrate, and an oxide-based solid electrolyte layer formed on one side or both sides of the substrate and including lithium aluminum titanium phosphate(LATP),
wherein the oxide-based solid electrolyte layer of the separator faces the lithium metal layer of the negative electrode, and
wherein an inorganic layer containing a reduced product of the LATP is formed at an interface between the oxide-based solid electrolyte layer and the lithium metal layer.

2. The lithium metal battery according to claim 1,
wherein the inorganic layer fills a part or all of the pores of the oxide-based solid electrolyte layer, or forms a separate layer at an interface between the oxide-based solid electrolyte layer and the lithium metal layer, or includes all of these forms.

3. The lithium metal battery according to claim 2,
wherein the inorganic layer is configured to fill the pores of the oxide-based solid electrolyte layer at 10 volume% to 100 volume% based on the total volume of the pores, and form a separate layer having a thickness of 1 nm to 100 nm.

4. The lithium metal battery according to claim 1,
wherein the LATP reduced product comprises a lithiated-LATP formed by a spontaneous lithiation reaction of the LATP as shown in the following Reaction Formula 1.
[Reaction Formula 1] Li_{1.3}Al_{0.3}Ti_{1.7}(PO₄)₃ -> Li₃Al_{0.3}Ti_{1.7}(PO₄)₃

5. The lithium metal battery according to claim 1,
wherein the lithium metal battery further comprises a lithium non-aqueous electrolyte, and
the inorganic layer further comprises the LATP reduced product and the SEI material, wherein the SEI material is at least one material selected from the group consisting of LiF, Li₂CO₃, and Li₂O.

6. The lithium metal battery according to claim 5,
wherein the inorganic layer is composed of a LATP reduced product and an SEI material.

7. The lithium metal battery according to claim 1,
wherein the oxide-based solid electrolyte layer is formed on both sides of the substrate.

8. The lithium metal battery according to claim 1,
wherein the substrate is a polyolefin substrate.

9. The lithium metal battery according to claim 1,
wherein the oxide-based solid electrolyte layer is composed of an oxide-based solid electrolyte containing lithium aluminum titanium phosphate(LATP) and a binder.

10. The lithium metal battery according to claim 1,
wherein the oxide-based solid electrolyte layer is formed to a thickness of 0.1 *µ*m to 20 *µ*m on one side of the substrate.

11. The lithium metal battery according to claim 1,
wherein the positive electrode active material layer comprises a lithium transition metal oxide represented by the following Chemical Formula 1 as a positive electrode active material:
[Chemical Formula 1] Li₁₊ₓNiₐCo_{b}Mn_{c}M_{1-(a+6+c)}O₂
wherein,
M is at least one selected from the group consisting of Al, Fe, V, Cr, Ti, Ta, Mg, and Mo, and
0≤x≤0.5, 0<a<1, 0<b<1, 0<c<1.

12. A method for manufacturing the lithium metal battery of claim 1, the method comprising the steps of:
manufacturing a lithium metal battery including an electrode assembly in which a separator having an oxide-based solid electrolyte layer containing lithium aluminum titanium phosphate(LATP) formed on one or both sides is interposed between a negative electrode and a positive electrode so that the oxide-based solid electrolyte is in contact with the lithium metal layer, and activating the lithium metal battery, wherein an inorganic layer containing a reduced product of LATP is formed at an interface between the oxide-based solid electrolyte layer and the lithium metal layer.

13. The method for manufacturing the lithium metal battery according to claim 12,
wherein the lithium metal battery is manufactured by incorporating the electrode assembly and the lithium non-aqueous electrolyte into a battery case.

14. The method for manufacturing the lithium metal battery according to claim 12,
wherein the inorganic layer further comprises the LATP reduced product and the SEI material, wherein the SEI material is at least one material selected from the group consisting of LiF, Li₂CO₃, and Li₂O.

15. The method for manufacturing the lithium metal battery according to claim 12,
wherein the activating comprises aging at room temperature for 12 to 36 hours.
